# EUROPEAN PATENT SPECIFICATION

(11) **EP 3 636 512 B1**
(45) Date of publication and mention of the grant of the patent: **01.11.2023**
(21) Application number: 18814469.5
(22) Date of filing: 23.03.2018
(51) Int. Cl.: B61L 15/00

(54) **TRAIN SAFETY SYSTEM, TRAIN SAFETY CONTROL METHOD, AND TRAIN ON-BOARD DEVICE**
ZUGSICHERHEITSSYSTEM, ZUGSICHERHEITSSTEUERVERFAHREN UND VORRICHTUNG AN BORD EINES ZUGES
SYSTÈME DE SÉCURITÉ DE TRAIN, PROCÉDÉ DE COMMANDE DE SÉCURITÉ DE TRAIN ET DISPOSITIF DE TRAIN EMBARQUÉ

(30) Priority: 09.06.2017 JP 2017113955
(43) Date of publication of application: 15.04.2020
(73) Proprietor: Hitachi, Ltd., Chiyoda-ku, Tokyo 100-8280 (JP)
(72) Inventor: NAKAMURA, Tomohiko, Tokyo 100-8280 (JP)
(74) Representative: Mewburn Ellis LLP
(86) International application number: PCT/JP2018/011609
(87) International publication number: WO 2018/225335

(56) References cited:
- JP-A- 2009 232 574
- JP-A- 2009 232 574
- JP-A- 2016 146 724
- US-A1- 2015 134 155
- US-A1- 2015 239 482

## Description

### Technical Field

The present invention relates to a train safety system, a train safety control method, and a train on-board device which improve safety of train traveling.

### Background Art

In a safety control method of a train in the related art, a "fixed block method" by train detection using a track circuit has been used. In recent years, a wireless communication system is introduced into transmission between on-board and on-ground, and introduction of a "moving block method" without using the track circuit has been advanced.

The moving block method includes an on-board device provided in the train and an on-ground device provided outside the train, and transmission is performed wirelessly between the on-board device and the on-ground device. The on-board device recognizes location information of a site by detecting an on-ground element on which a train main body is provided on the ground. Speed information and location information of the train is calculated based on this location information, wheel diameter information of the train and rotation speed of an axle, and brake control is performed based on a traveling location and a travel permission speed received from the on-ground device. For example, PTL. 1 discloses a method in which, when calculating a train length to know a current location of the train, a train length correction value determined according to travel distances obtained by integrating train speeds on a front head side and a rear end side of an actual train length is added in consideration of an error of the speed information in a train control system using ATACS. PTL. 2 proposes a train control apparatus which calculates position and speed information based on stored maximum and minimum wheel diameters, rotation speed of a detected wheel and positional information received from a ground unit.

### Prior Art Literature

### Patent Literature

PTL 1: Japanese Patent No. 4575807
PTL 2: Japanese Patent Application 2009232574 A

### Summary of Invention

### Technical Problem

In the train safety control using the fixed block method in the related art, a predetermined variable is set in a range set as normal which is in a preset wheel diameter within a range of the maximum wheel diameter and the minimum wheel diameter, and when a wheel diameter outside this range is set, control is performed so as to direct toward a safety side by using the maximum wheel diameter for speed calculation or the like.

However, in the train safety control using the moving block method, use of the maximum wheel diameter for speed calculation or the like is not necessarily controlled so as to be directed toward the safety side. This is because, on the contrary, by using the maximum wheel diameter, for example, there is a possibility to cause an approach equal to or exceeding an acceptable range in recognizing a location relationship with a succeeding train.

Therefore, an object of the present invention is to provide a train safety system that prevents safety of the safety control of the train from being reduced even when a wheel diameter beyond the range set as normal is set in the moving block method. Here, in respect to the wheel diameter, a range set to be normal refers to a range in which the wheel diameter being ground by usage in traveling or the like is allowed to travel without any trouble. Hereinafter, the range set as normal is simply referred to as a "normal range".

### Solution to Problem

In order to solve above problems, a train safety system according to the invention is provided, in which when a wheel diameter beyond a normal range is set, two appropriate types of the wheel diameters are used for safety control of a train after being selected among three types of values including the maximum wheel diameter and the minimum wheel diameter in a normal range, and a wheel diameter beyond the normal range.

In a first aspect a train on-board device is provided according to claim 1.

In a second aspect a train safety control method is provided according to claim 6.

### Advantageous Effect

According to the invention, even when a wheel diameter beyond the normal range is set, safety of the safety control of the train is ensured, and operations of the train is not obstructed and can be continued.

### Brief Description of Drawings

[FIG. 1] FIG. 1 is a diagram illustrating a method for correcting a train length according to the invention.
[FIG. 2] FIG. 2 is a diagram illustrating the configuration of a train safety system according to an embodiment of the invention.
[FIG. 3] FIG. 3 is a diagram illustrating the configuration provided with an on-board control device according to the embodiment of the invention.
[FIG. 4] FIG. 4 is a diagram illustrating a set value of a wheel diameter of a train according to the embodiment of the invention.
[FIG. 5] FIG. 5 is a diagram illustrating recorded contents of an on-board control device recording unit according to the embodiment of the invention.
[FIG. 6] FIG. 6 is a diagram illustrating contents of an on-ground side transmission telegram according to the embodiment of the invention.
[FIG. 7] FIG. 7 is a diagram illustrating contents of an on-board side transmission telegram according to the embodiment of the invention.
[FIG. 8] FIG. 8 is a flowchart illustrating a procedure for determining control wheel diameters X and Y according to the embodiment of the invention.

### Description of Embodiments

An embodiment of the invention will be described below with reference to the accompanying drawings.

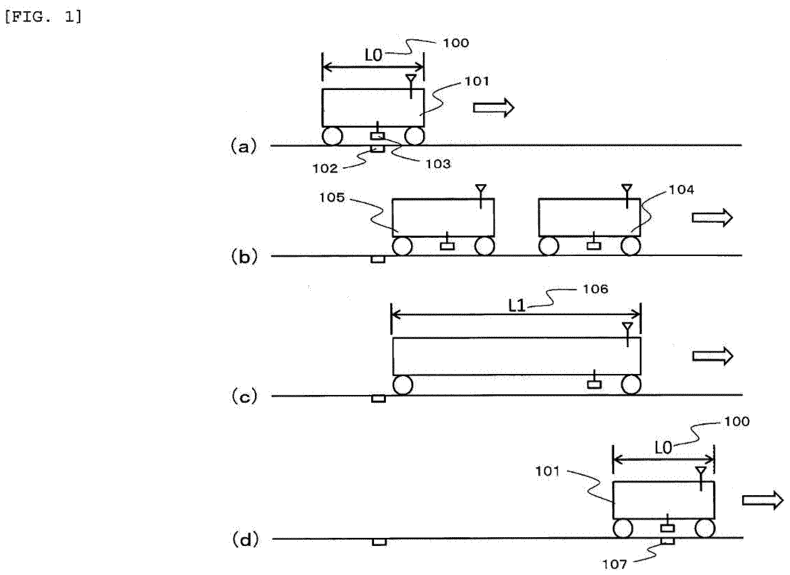

FIG. 1 is a diagram illustrating a method for correcting a train length according to the invention.

A train 101 is mounted with an on-board element 103 and acquires location information from an on-ground element A (102) . FIG. 1(a) illustrates a moment at which the train 101 acquires the location information from the on-ground element A (102) . At this time, a train length used for safety control is a preset train length L0 (100).

FIG. 1(b) illustrates a state in which the train is running after the location information is acquired. The invention includes a control wheel diameter X and a control wheel diameter Y (X > Y), and FIG. 1(b) illustrates a train location 104 calculated based on the control wheel diameter X and a train location 105 calculated based on the control wheel diameter Y. Since a value relationship between the control wheel diameters is X > Y, the train location 104 calculated based on the control wheel diameter X is in a front side of the train location 105 calculated based on the control wheel diameter Y in a traveling direction.

FIG. 1(c) illustrates a corrected train length L1. A distance from a front head of the train location 104 calculated based on the control wheel diameter X to a rear end of the train location 105 calculated based on the control wheel diameter Y is a corrected train length L1 (106).

FIG. 1(d) illustrates a moment at which the train 101 acquires the location information from an on-ground element B (107). At this time, the train length used for safety control is the preset train length L0 (100).

In the invention, between the on-ground elements, two pieces of location information are calculated based on two different wheel diameters, and the distance from the front head of the train location indicating the front of the traveling direction to the rear end of the train location indicating the rear of the traveling direction is used as the train length for correction, so as to ensure safety in the safety control.

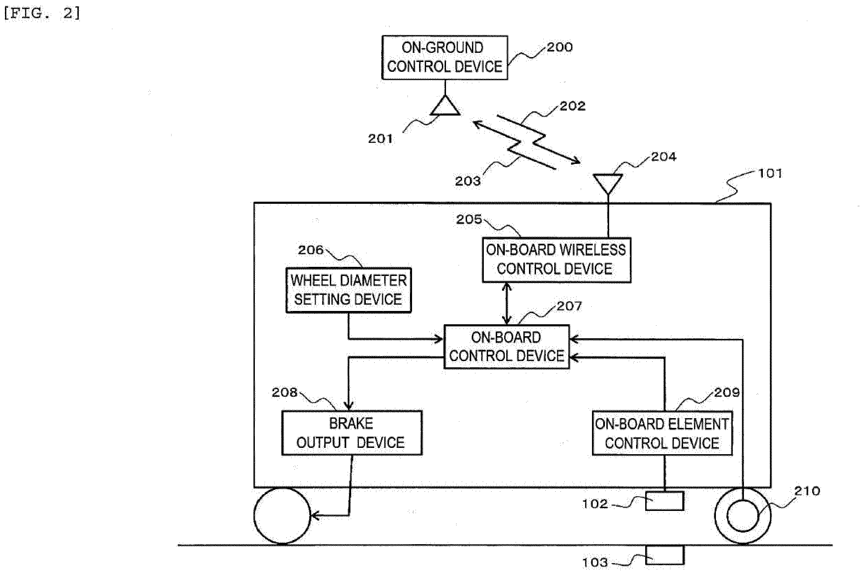

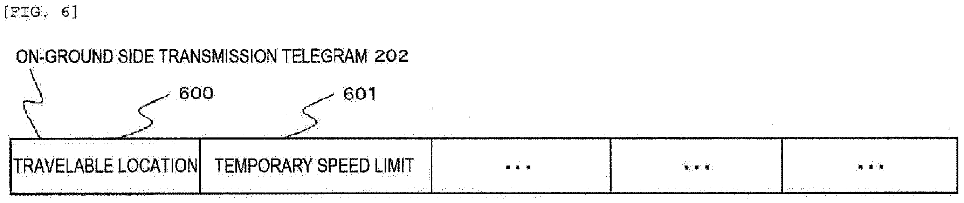

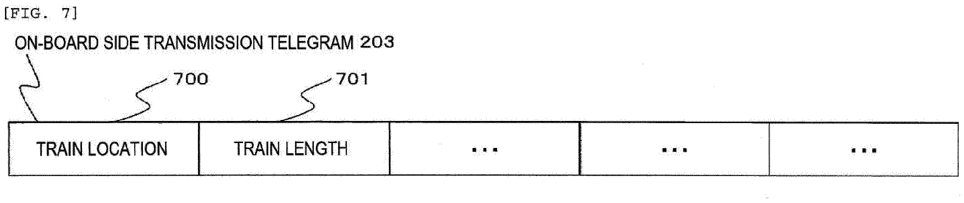

FIG. 2 is a diagram illustrating the configuration of a train safety system. In addition, contents of an on-ground side transmission telegram 202 are illustrated in FIG. 6, and contents of an on-board side transmission telegram 203 are illustrated in FIG. 7.

An on-ground control device 200 transmits the on-ground side transmission telegram 202 (see FIG. 6) including information such as a travelable location 600 and a temporary speed limit 601 from an on-ground antenna 201 via an on-ground wireless control device (not shown).

An on-board antenna 204 provided in the train 101 receives the on-ground side transmission telegram 202. An on-board wireless control device 205 processes the received on-ground side transmission telegram 202, and transmits the received telegram as information from the on-ground control device 200 to an on-board control device 207.

The on-board control device 207 acquires a set wheel diameter 500 from a wheel diameter setting device 206 in which the diameter is set, and axle rotation speed information from an axle rotation speed detecting device 210 by which the information is detected.

Information transmitted from the on-ground element 103 is received by the on-board element 102 provided in the train 101, is processed by an on-board element control device 209, and is transmitted to the on-board control device 207.

Based on the wheel diameter setting information from the wheel diameter setting device 206, the axle rotation speed information from the axle rotation speed detecting device 210 and the location information from the on-ground element 103, each information of a current train location 700 and a train length 701 is calculated by the on-board control device 207 and is transmitted to the on-board wireless control device 205. These pieces of information are transmitted from the on-board antenna 204 to the on-ground antenna 201 as a part of the on-board side transmission telegram 203 (see FIG. 7).

The on-board control device 207 outputs a brake command to a brake output device 208 when it is determined that a brake is necessary to be applied based on the information of the travelable location 600, the temporary speed limit 601, a train speed, the train location 700 and the train length 701.

A wheel diameter to be set to the wheel diameter setting device 206 may be set as a value of a diameter actually measured from a wheel, or may be set as a value of a wheel diameter obtained from a traveling distance or a travelling speed and a rotation speed of the wheel.

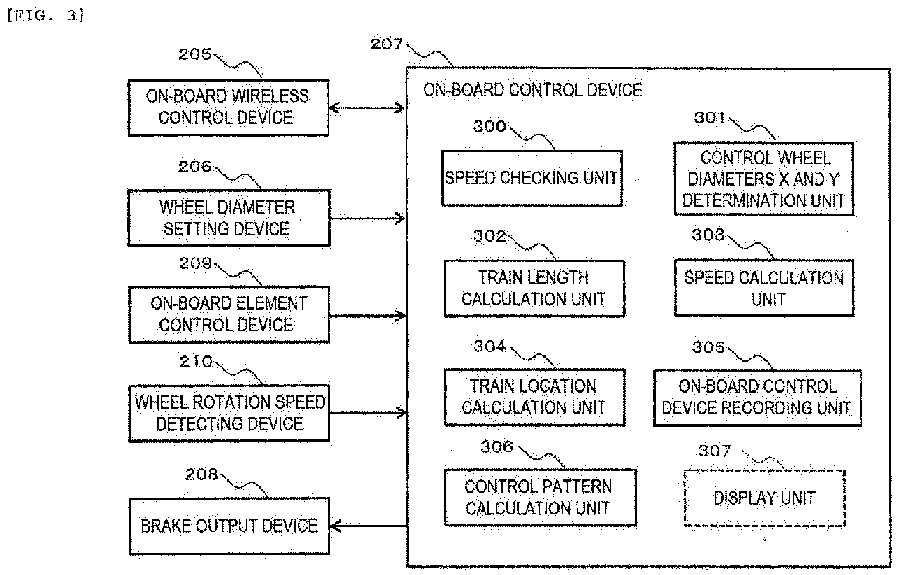

FIG. 3 is a diagram illustrating the configuration provided with the on-board control device 207.

The on-board control device 207 includes a speed checking unit 300, a control wheel diameters X and Y determination unit 301, a train length calculation unit 302, a speed calculation unit 303, a train location calculation unit 304, an on-board control device recording unit 305 and a control pattern calculation unit 306. If necessary, a display unit 307 may also be provided.

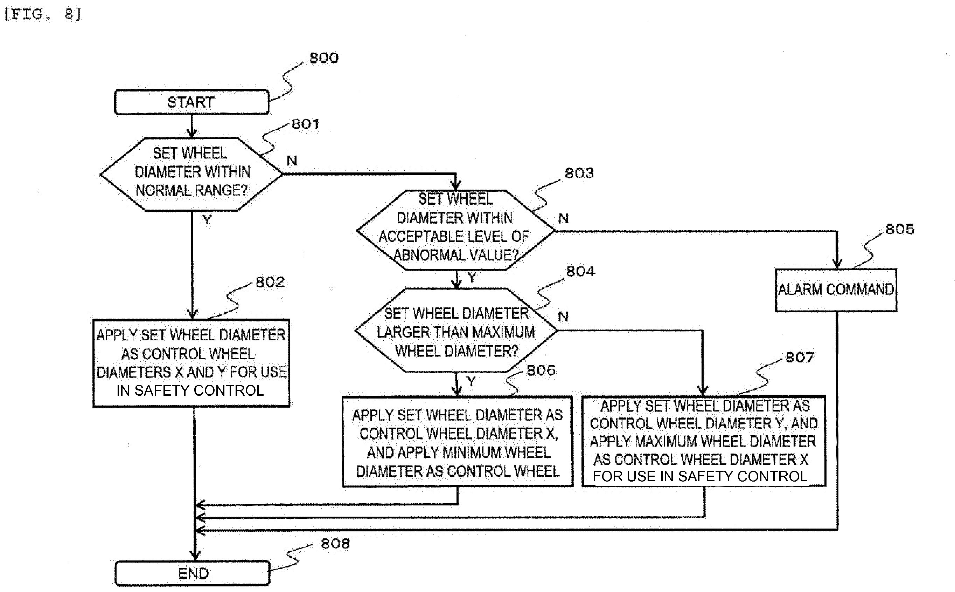

The control wheel diameters X and Y determination unit 301 determines a control wheel diameter X 502 and a control wheel diameter Y 503 based on the set wheel diameter 500 set in the wheel diameter setting device 206 and a wheel diameter normal range 501. A procedure for determining the control wheel diameter X and the control wheel diameter Y will be described later with reference to FIG. 8.

Based on the axle rotation speed information obtained by the axle rotation speed detecting device 210, the speed calculation unit 303 calculates a train speed X 505 by using the control wheel diameter X 502 and a train speed Y 506 by using the control wheel diameter Y 503.

Based on the location information obtained from the on-board element control device 209, the train location calculation unit 304 calculates a train location X 507 by using the train speed X 505 and a train location Y 508 by using the train speed Y 506. Here, the information of the train location 700 included in the on-board side transmission telegram 203 may be the train location X 507 or the train location Y 508.

The train length calculation unit 302 calculates the train length 701 based on the train location X 507 and the train location Y 508.

The control pattern calculation unit 306 calculates a speed limit pattern 509 based on each piece of information of the travelable location 600 and the temporary speed limit 601 that are obtained from the ground side transmission telegram 202, and based on each information of the train location 700 and the train length 701 (included in the on-board side transmission telegram 203).

Based on the speed limit pattern 509 calculated by the control pattern calculation unit 306, the train speed X 505 calculated by the speed calculation unit 303 and the train location X 507 calculated by the train location calculation unit 304, the speed checking unit 300 determines whether or not output of the brake is necessary.

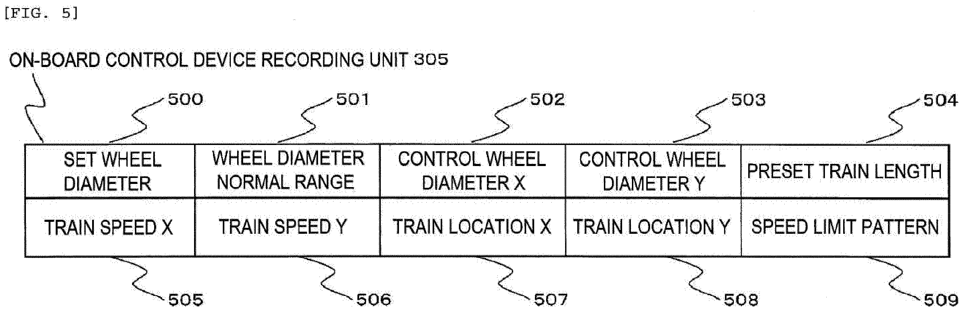

FIG. 5 illustrates recorded contents of the on-board control device recording unit 305. The set wheel diameter 500, the wheel diameter normal range 501, the control wheel diameter X 502, the control wheel diameter Y 503, a preset train length 504, the train speed X 505, the train speed Y 506, the train location X 507, the train location Y 508 and the speed limit pattern 509 are recorded in the on-board control device recording unit 305.

When the display unit 307 is provided, any one or both of appropriate necessary information based on various pieces of information recorded by the on-board control device recording unit 305 and information according to an alarm to be described later is displayed. At this time, the information may be displayed together with information related to other control other than safety. Further, the alarm may be accompanied by a notification sound.

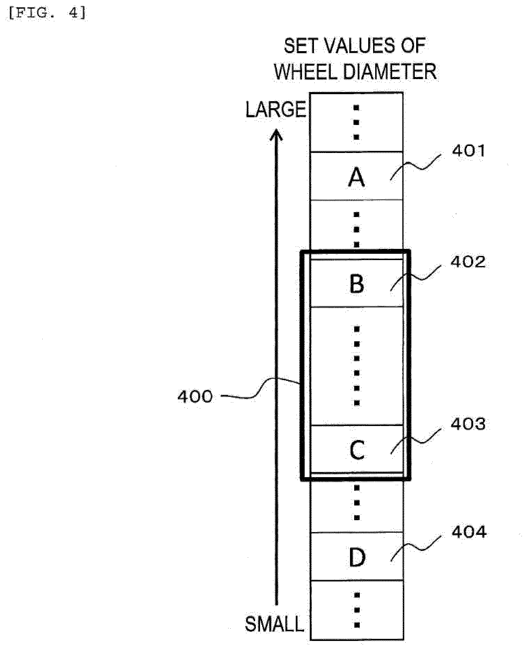

FIG. 4 is a diagram illustrating set values of the wheel diameter according to the embodiment of the invention. For the wheel diameter, as described above, since the wheel is ground by usage in traveling, it is treated as a predetermined variable. In the diagram, a part surrounded by a thick frame represents the wheel diameter normal range; in the part, a set value B 402 is the maximum wheel diameter in the normal range, and a set value C 403 is the minimum wheel diameter in the normal range. A set value A 401 is one of values larger than the normal range, and a set value D 404 is one of values smaller than the normal range.

FIG. 8 is a flowchart illustrating the procedure for determining control wheel diameters X and Y according to the embodiment of the invention.

The values as described above in FIG. 4 are used for the set wheel diameter (hereinafter referred to as "set wheel diameter"). However, when the set wheel diameter exceeds an acceptable level of an abnormal value (for example, when an extreme value such as "0" is set), an alarm is informed (by at least one of display and notification sound).

A determination procedure (software) based on this flowchart is executed by the control wheel diameters X and Y determination unit 301. Therefore, since a processing subject of each step of this flowchart is the control wheel diameters X and Y determination unit 301, the description of processing subject is omitted when describing each following step.

In Step 800, execution of a process is started.

In Step 801, it is determined whether or not the wheel diameter (set wheel diameter 500) set in the wheel diameter setting device 206 is within the normal range (that is, the maximum wheel diameter B 402 or less and the minimum wheel diameter C 403 or more as illustrated in FIG. 4) . If the set wheel diameter 500 is within the normal range (Y), Step 802 is executed, and if the set wheel diameter 500 is not within the normal range (N), Step 803 is executed.

In Step 802, the set wheel diameter 500 is applied as the control wheel diameters X and Y. Next, in Step 808, the determination procedure ends. The on-board control device 207 performs the safety control based on the control wheel diameters X and Y obtained in Step 802. Since the set wheel diameter 500 is within the normal range, there is no problem in applying this set wheel diameter 500 as both the control wheel diameters X and Y.

In Step 803, it is determined whether or not the set wheel diameter 500 that is not within the normal range exceeds the acceptable level of the abnormal value. If the diameter is within the acceptable level (Y), Step 804 is executed, and if the diameter exceeds the acceptable level (N), Step 805 to be described later is executed.

In Step 804, it is determined whether or not the set wheel diameter 500 is larger than the maximum wheel diameter B 402 of the normal range. If the set wheel diameter is larger (Y), Step 806 is performed, and if not (N) (that is, smaller than the minimum wheel diameter C 403 of the normal range since it is beyond the normal range), Step 807 is performed.

In Step 806, the set wheel diameter 500 is applied as the control wheel diameter X, and the minimum wheel diameter C 403 in the normal range is applied as the control wheel diameter Y. Next, in Step 808, the determination procedure ends. The on-board control device 207 performs the safety control based on these control wheel diameters X and Y. Since the set wheel diameter 500 is larger than the maximum wheel diameter B 402 in the normal range, the set wheel diameter 500 is applied as the control wheel diameter X, and the minimum wheel diameter C 403 in the normal range is applied as the control wheel diameter Y, thereby performing the safety control on a most safe site.

In Step 807, the set wheel diameter 500 is applied as the control wheel diameter Y, and the maximum wheel diameter B 402 in the normal range is applied as the control wheel diameter X. Next, in Step 808, the determination procedure ends. The on-board control device 207 performs the safety control based on these control wheel diameters X and Y. Since the set wheel diameter 500 is smaller than the minimum wheel diameter C 403 in the normal range, the maximum wheel diameter B 402 in the normal range is applied as the control wheel diameter X, and the set wheel diameter 500 is applied as the control wheel diameter Y, thereby performing the safety control on the most safe site.

However, in Step 805, since the set wheel diameter 500 exceeds the acceptable level of the abnormal value, it is difficult to safely execute the safety control, and an alarm command is output to immediately inform the alarm (by at least one of the display and the notification sound) . Next, in Step 808, the determination procedure ends. The on-board control device 207 receives the alarm command and notifies an alarm (not illustrated) . When the display unit 307 is provided, the alarm is notified in at least one form of displaying alarm and the notification sound by sound output.

As described above, even when the wheel diameter beyond the normal range is set, the safety of the safety control of the train is always ensured, and safe operations of the train can be continued.

The invention is not limited to the embodiment described above, and includes various modifications. For example, the embodiment described above have been described in detail for easy understanding of the invention, and the invention is not necessarily limited to those including all the configurations described above. The invention is defined by the appended claims. In regard to each of the above-mentioned configurations, functions, processing units, and the like, a part thereof or an entirety thereof may be achieved by hardware, for example, by being designed as an integrated circuit. In addition, the above-described configurations, functions, and the like may also be realized by software by interpreting and executing programs that realize respective functions by a processor. Information such as a program, a table, and a file that implements each function can be stored in a storage device such as a memory, a hard disk, a Solid State Drive (SSD), or in a recording medium such as an IC card, an SD card, or a DVD.

### Reference Sign List

100: Preset train length
101: Train
102: On-ground element A
103: On-board element
104: Train location calculated based on control wheel diameter X
105: Train location calculated based on control wheel diameter Y
106: Corrected train length
107: On-ground element B
200: On-ground control device
201: On-ground antenna
202: On-ground side transmission telegram
203: On-board side transmission telegram
204: On-board antenna
205: On-board wireless control device
206: Wheel diameter setting device
207: On-board control device
208: Brake output device
209: On-board element control device
210: Axle rotation speed detecting device
300: Speed checking unit
301: Control wheel diameters X and Y determination unit
302: Train length calculation unit
303: Speed calculation unit
304: Train location calculation unit
305: On-board control device recording unit
306: Control pattern calculation unit
307: Display unit

## Claims

1. A train on-board device comprising:
a rotation speed detecting device (210) configured to detect a rotation speed of a wheel driven by a train; and
a safety device configured to control the train based on a speed checking, wherein
the safety device includes:
a recording unit (305) configured to record a normal range (501) of the wheel diameter as one piece of information;
**characterized in that**:
the train on-board device further comprises a wheel diameter setting device (206) configured to set a wheel diameter of the wheel (500); and
wherein the safety device also includes:
a determination unit configured to determine at least two types of control wheel diameters to be used in safety control of the train based on a comparison result between a set wheel diameter (500) set by the wheel diameter setting device and the normal range (501) of the wheel diameter from the recording unit (305); and
a calculation unit configured to calculate a train speed and a train location of the train by using the control wheel diameters.

2. The train on-board device according to claim 1, wherein
the safety device is configured to inform an alarm when the set wheel diameter (500) exceeds an acceptable level of an abnormal value.

3. The train on-board device according to claim 2, wherein
the safety device includes a display unit (307) configured to display at least one of the information recorded in the recording unit (305) and the alarm.

4. A train safety system comprising:
the train on-board device according to any one of claims 1 to 3 that is mounted with an on-board communication device; and
an on-ground device that is provided with a ground communication device, wherein
information indicating a current state of the train output by the train on-board device and information for the safety control of the train output by the on-ground device (107) are transmitted and received therebetween.

5. The train safety system according to claim 4 further comprising:
an on-ground element (103) provided near a track on which the train travels; and
an on-board element (102) mounted on the train on-board device and configured to transmit and receive information to and from the on-ground element (103).

6. A train safety control method comprising:
setting a wheel diameter obtained by actual measurement or calculation as a set wheel diameter;
determining whether or not the set wheel diameter is within a normal range of the wheel diameter;
applying the set wheel diameter as a control wheel diameter to be used in safety control of a train when the set wheel diameter is within the normal range;
applying the set wheel diameter as a large value of the control wheel diameter and applying the minimum value in the normal range as a small value of the control wheel diameter, when the set wheel diameter is not within the normal range and is larger than the maximum value in the normal range; and
applying the maximum value in the normal range as the large value of the control wheel diameter and applying the set wheel diameter as the small value of the control wheel diameter, when the set wheel diameter is not within the normal range and is smaller than the minimum value in the normal range.

7. The train safety control method according to claim 6, wherein
an alarm is informed when the set wheel diameter exceeds an acceptable level of an abnormal value.

## Patentansprüche

1. Zug-Bordvorrichtung, die Folgendes umfasst:
eine Drehzahldetektionsvorrichtung (210), die dazu ausgelegt ist, die Drehzahl eines von einem Zug angetriebenen Rads zu detektieren; und
eine Sicherheitsvorrichtung, die dazu ausgelegt ist, den Zug basierend auf einer Geschwindigkeitsüberprüfung zu steuern, wobei
die Sicherheitsvorrichtung Folgendes umfasst:
eine Aufzeichnungseinheit (305), die dazu ausgelegt ist, einen Normalbereich (501) des Raddurchmessers als eine Information aufzuzeichnen;
**dadurch gekennzeichnet, dass**:
die Zug-Bordvorrichtung ferner eine Raddurchmessereinstellvorrichtung (206) umfasst, die dazu ausgelegt ist, einen Raddurchmesser des Rads (500) einzustellen; und
wobei die Sicherheitsvorrichtung außerdem Folgendes umfasst:
eine Bestimmungseinheit, die dazu ausgelegt ist, basierend auf dem Ergebnis eines Vergleichs zwischen einem eingestellten Raddurchmesser (500), der durch die Raddurchmessereinstellvorrichtung eingestellt wird, und dem Normalbereich (501) des Raddurchmessers von der Aufzeichnungseinheit (305) zumindest zwei Typen von Steuerraddurchmessern zu bestimmen, die bei einer Sicherheitssteuerung des Zugs zu verwenden sind;
eine Berechnungseinheit, die dazu ausgerichtet ist, unter Verwendung des Steuerraddurchmessers eine Zuggeschwindigkeit und eine Zugposition des Zugs zu berechnen.

2. Zug-Bordvorrichtung nach Anspruch 1, wobei die Sicherheitsvorrichtung dazu ausgelegt ist, einen Alarm zu informieren, wenn der eingestellte Raddurchmesser (500) einen annehmbaren Pegel eines abnormalen Werts übersteigt.

3. Zug-Bordvorrichtung nach Anspruch 2, wobei die Sicherheitsvorrichtung eine Anzeigeeinheit (307) umfasst, die dazu ausgelegt ist, zumindest eine aus den in der Aufzeichnungseinheit (305) aufgezeichneten Informationen und dem Alarm anzuzeigen.

4. Zugsicherheitssystem, das Folgendes umfasst:
eine Zug-Bordvorrichtung nach einem der Ansprüche 1 bis 3, die mit einer Bord-Kommunikationsvorrichtung montiert ist; und
eine Boden-Vorrichtung, die mit einer Boden-Kommunikationsvorrichtung bereitgestellt ist, wobei
Informationen, die einen durch die Zug-Bordvorrichtung ausgegebenen aktuellen Zustand des Zugs angeben, und von der Boden-Kommunikationsvorrichtung (107) ausgegebene Informationen für die Sicherheitssteuerung des Zugs zwischen ihnen übertragen und empfangen werden.

5. Zugsicherheitssystem nach Anspruch 4, ferner Folgendes umfassend:
ein Boden-Element (103), das in der Nähe eines Gleises, auf dem der Zug fährt, bereitgestellt ist; und
ein Bord-Element (102), das auf der Zug-Bordvorrichtung montiert und dazu ausgelegt ist, Informationen an das Boden-Element (103) zu übertragen bzw. von diesem zu empfangen.

6. Zugsicherheitssteuerungsverfahren, Folgendes umfassend:
Einstellen eines Raddurchmessers, der durch tatsächliche Messung oder Berechnung erhalten wurde, als eingestellten Raddurchmesser;
Bestimmen, ob der eingestellte Raddurchmesser innerhalb eines Normalbereichs des Raddurchmessers liegt;
Anwenden des eingestellten Raddurchmessers als Steuerraddurchmesser, der bei der Sicherheitssteuerung eines Zugs zu verwenden ist, wenn der eingestellte Raddurchmesser innerhalb des Normalbereichs liegt;
Anwenden des eingestellten Raddurchmessers als großen Wert des Steuerraddurchmessers und Anwenden des Mindestwerts im Normalbereich als kleinen Wert des Steuerraddurchmessers, wenn der eingestellte Raddurchmesser nicht innerhalb des Normalbereichs liegt und größer als der Höchstwert im Normalbereich ist; und
Anwenden des Höchstwerts im Normalbereich als großen Wert des Steuerraddurchmessers und Anwenden des eingestellten Raddurchmessers als kleinen Wert des Steuerraddurchmessers, wenn der eingestellte Raddurchmesser nicht innerhalb des Normalbereichs liegt und kleiner ist als der Mindestwert im Normalbereich.

7. Zugsicherheitssteuerungsverfahren nach Anspruch 6,
wobei ein Alarm informiert wird, wenn der eingestellte Raddurchmesser einen annehmbaren Pegel eines abnormalen Werts übersteigt.

## Revendications

1. Dispositif embarqué sur train comprenant :
un dispositif de détection de vitesse de rotation (210) configuré pour détecter une vitesse de rotation d'une roue entraînée par un train ; et
un dispositif de sécurité configuré pour commander le train sur la base d'un contrôle de vitesse, dans lequel
le dispositif de sécurité comprend :
une unité d'enregistrement (305) configurée pour enregistrer une plage normale (501) du diamètre de roue en tant qu'un élément d'informations ;
**caractérisé en ce que** :
le dispositif embarqué sur train comprend en outre un dispositif d'établissement de diamètre de roue (206) configuré pour établir un diamètre de roue de la roue (500) ; et
dans lequel le dispositif de sécurité comprend également :
une unité de détermination configurée pour déterminer au moins deux types de diamètres de roue de commande à utiliser lors d'une commande de sécurité du train sur la base d'un résultat de comparaison entre un diamètre de roue établi (500) établi par le dispositif d'établissement de diamètre de roue et la plage normale (501) du diamètre de roue provenant de l'unité d'enregistrement (305) ; et
une unité de calcul configurée pour calculer une vitesse de train et un emplacement de train du train en utilisant les diamètres de roue de commande.

2. Dispositif embarqué sur train selon la revendication 1, dans lequel
le dispositif de sécurité est configuré pour communiquer une alarme lorsque le diamètre de roue établi (500) dépasse un niveau acceptable d'une valeur anormale.

3. Dispositif embarqué sur train selon la revendication 2, dans lequel
le dispositif de sécurité comprend une unité d'affichage (307) configurée pour afficher au moins une des informations enregistrées dans l'unité d'enregistrement (305) et l'alarme.

4. Système de sécurité de train, comprenant :
le dispositif embarqué sur train selon l'une quelconque des revendications 1 à 3 qui est monté avec un dispositif de communication embarqué ; et
un dispositif au sol qui est pourvu d'un dispositif de communication au sol, dans lequel
des informations indiquant un état actuel du train délivrées en sortie par le dispositif embarqué sur train et des informations pour la commande de sécurité du train délivrées en sortie par le dispositif au sol (107) sont transmises et reçues entre eux.

5. Système de sécurité de train selon la revendication 4 comprenant en outre :
un élément au sol (103) prévu à proximité d'une voie sur laquelle le train se déplace ; et
un élément embarqué (102) monté sur le dispositif embarqué sur train et configuré pour transmettre et recevoir des informations vers et depuis l'élément au sol (103).

6. Procédé de commande de sécurité de train comprenant les étapes consistant à :
établir un diamètre de roue obtenu par mesure réel ou calcul en tant que diamètre de roue établi ;
déterminer si le diamètre de roue établi se trouve ou non dans une plage normale du diamètre de roue ;
appliquer le diamètre de roue établi comme diamètre de roue de commande à utiliser lors d'une commande de sécurité d'un train lorsque le diamètre de roue établi est dans la plage normale ;
appliquer le diamètre de roue établi en tant que grande valeur du diamètre de roue de commande et appliquer la valeur minimale dans la plage normale en tant que petite valeur du diamètre de roue de commande, lorsque le diamètre de roue établi ne se trouve pas dans la plage normale et est supérieur à la valeur maximale dans la plage normale ; et
appliquer la valeur maximale dans la plage normale en tant que grande valeur du diamètre de roue de commande et appliquer le diamètre de la roue établi en tant que petite valeur du diamètre de roue de commande, lorsque le diamètre de roue établi ne se trouve pas dans la plage normale et est inférieur à la valeur minimale dans la plage normale.

7. Procédé de commande de sécurité de train selon la revendication 6, dans lequel
une alarme est communiquée lorsque le diamètre de roue établi dépasse un niveau acceptable d'une valeur anormale.
